# EUROPEAN PATENT APPLICATION

(11) **EP 2 030 832 A2**
(43) Date of publication of application: **04.03.2009**
(21) Application number: 08015282.0
(22) Date of filing: 29.08.2008
(51) Int. Cl.: B60N 2/08

(54) **Seat slide apparatus**

(30) Priority: 31.08.2007 JP 2007225175
(71) Applicant: FUJI KIKO Co., Ltd., Kosai-shi, Shizuoka 431-0431 (JP)
(72) Inventor: Soga, Takuji, Kosai-shi Shizuoka 431-0431 (JP)
(74) Representative: Grünecker, Kinkeldey, Stockmair & Schwanhäusser Anwaltssozietät

(57) **Abstract**

A seat slide apparatus for a vehicle includes: a lower rail (1); an upper rail (2); a lock arm (8) including lock claws (8b); a memory rail (31) including engagement grooves (31b); a memory base (32) including an engagement member (32b); a lock release lever; and a connection separation lever (37). The lock claws (8b) are arranged to be engaged or disengaged with the lock holes at a position other than a position at which the engagement portion is engaged with the one of the engagement grooves (31b). The upper rail (2) includes a pushing portion arranged to push the engagement member when the upper rail is moved in the forward direction of the vehicle at the release state between the upper rail (2) and the memory base (32), and to move the memory base (32) at the position at which the engagement portion is engaged with the one of the engagement grooves (31b).

## Description

### BACKGROUND OF THE INVENTION

This invention relates to a seat slide apparatus for a vehicle, and more specifically to a seat slide apparatus including an walk-in mechanism arranged to release a lock of a rail lock mechanism in synchronism with a forward tilting movement of a seat back of a forward seat, and to advance the overall seat when an occupant get on and off a rear seat in a two-door vehicle and so on.

Japanese Patent Application Publication No. 2006-281814 discloses a seat slide apparatus including a memory mechanism arranged to memorize a position of a seat mechanically so as not to vary the position of the seat in forward and rearward directions at which an occupant of the front seat is set when an occupant gets on or off the rear seat in a two-door vehicle.

In this seat slide apparatus, a walk-in cable is pulled at a forward tilting motion of the seat back, a memory portion release lever is pivoted, and a lower end portion of the memory portion release lever pivots a latch release rod. Accordingly, main lock claws provided to an upper rail are separated from main lock holes formed in a lower rail. A released plate is pivoted by an urging force of a memory spring. A pushing portion at a lower end is separated from a memory plate. The memory plate is pivoted by the urging force of the spring, and the engagement claws are inserted into cutaway portions of position memory components to memorize a position of the memory base. Accordingly, the upper rail is moved in the forward direction by the urging force of the walk-in spring with the memory base left at that position. Then, when the seat back is raised and the seat is moved in the rearward direction, the engagement portion of the plate is abutted on a stopper portion of the memory base, and the plate is pivoted. Therefore, the pushing portion of the lower end of the plate pushes the memory plate, the memory plate is pivoted against the urging force of the spring, and the engagement claws are disengaged from the cutaway portions of the position memory component. Accordingly, the memory base can be moved as a unit with the upper rail. In this connection state, the memory portion release lever is pivoted in the lock direction by the urging force of the memory spring, so that the pushing portion of the plate is restricted to be pivoted by being urged in a direction to be apart from the memory base. The lower end portion of the memory portion release lever releases the latch release rod by the pivot movement of the memory portion release lever, and the main lock claws are inserted by the urging force of the spring into the main lock holes formed in the lower rail, so that the upper rail is locked.

That is, when the main lock claws are located at positions at which the main lock claws can be engaged and disengaged with the main lock holes, the engagement claws of the memory plate are also located at positions at which the engagement claws of the memory plate can be engaged and disengaged with the cutaway portions of the position memory component. The upper rail is locked with respect to the lower rail in synchronism with the lock operation of the memory base with respect to the position memory component.

### SUMMARY OF THE INVENTION

However, when the seat is moved in the rearward direction, the pivot movement of the plate abutted on the stopper portion of the memory base may be delayed, and the timing that the main lock claws are inserted into the main lock holes of the lower rail may be delayed by the dispersion of the size of the components at the manufacture. Therefore, the main lock claws are inserted into ones of the main lock holes located at positions which are rearward of the original lock positions to be engaged, and which are adjacent to or nearest to the original lock positions. The seat is locked at the position different from the memorized position.

It is, therefore, an object of the present invention to provide a seat slide apparatus devised to solve the above-mentioned problems, and having a mechanism arranged to surely lock at an original position.

According to one aspect of the present invention, a seat slide apparatus for a vehicle comprises: a lower rail fixed on a lower surface of a vehicle body, the lower rail including lock holes formed at a predetermined pitch; an upper rail slidably mounted to the lower rail, and connected with a seat; a lock arm pivotally provided to the upper rail; a plurality of lock claws formed in the lock arm, and arranged to be engaged with the lock holes of the lower rail; an arm urging member arranged to urge the lock arm in a lock direction in which the lock claws are engaged with the lock holes; a lock release pushed portion formed in the lock arm, and arranged to pivot the lock arm against the urging force of the arm urging member in a lock release direction in which the lock claws are disengaged with the lock holes; a memory rail connected with an upper surface within the lower rail, the memory rail including engagement grooves formed at a pitch identical to the pitch of the lock holes; a memory base arranged to move along the memory rail, the memory base including: an engagement member pivotally provided to the memory base, the engagement member including an engagement portion arranged to be engaged and disengaged with one of the engagement grooves, and an engagement member urging member arranged to urge the engagement member in a direction in which the engagement portion is engaged with one of engagement grooves; a lock release lever connected with a walk-in cable arranged to be pulled in synchronism with a forward tilting motion of a seat back, and arranged to push the lock release pushed member when the walk-in cable is pulled, and to pivot the lock arm in the lock release direction; and a connection separation lever arranged to connect the memory base to the upper rail to integrally move the memory base and the upper rail in the forward and rearward directions of the vehicle, to release the connection between the upper rail and the memory base and to release a pushing to the engagement member so that the engagement portion is engaged with one of the engagement grooves when the lock release lever pivots the lock arm in the lock release direction; the lock claws being arranged to be engaged or disengaged with the lock holes at a position other than a position at which the engagement portion is engaged or disengaged with one of the engagement grooves, the upper rail including a pushing portion arranged to push the engagement member in the forward direction of the vehicle when the upper rail is moved in the forward direction of the vehicle at the release state between the upper rail and the memory base, and to move the memory base to a position at which the engagement portion is engaged with one of the engagement grooves.

### BRIEF DESCRIPTION OF THE_DRAWINGS

FIG. 1 is an exploded perspective view showing a seat slide apparatus according to one embodiment of the present invention.

FIG. 2 is a perspective view showing a memory rail of the seat slide apparatus of FIG. 1.

FIG. 3 is a perspective view showing a memory base of the seat slide apparatus of FIG. 1.

FIG. 4 is a front sectional view showing a part of the seat slide apparatus of FIG. 1.

FIG. 5 is a view as viewed from a direction shown by an arrow V-V in FIG. 4.

FIG. 6 is an illustrative view showing a state in which a pushing portion pushes an engagement member in a forward direction of a vehicle.

FIGS. 7A∼7D are operation illustrative views showing a case in which a seat back tilts in a forward direction and a seat is moved in the forward direction.

FIGS. 8A∼8D are operation illustrative views showing a case in which the seat is raised and returned in the rearward direction.

### DETAILED DESCRIPTION OF THE INVENTION

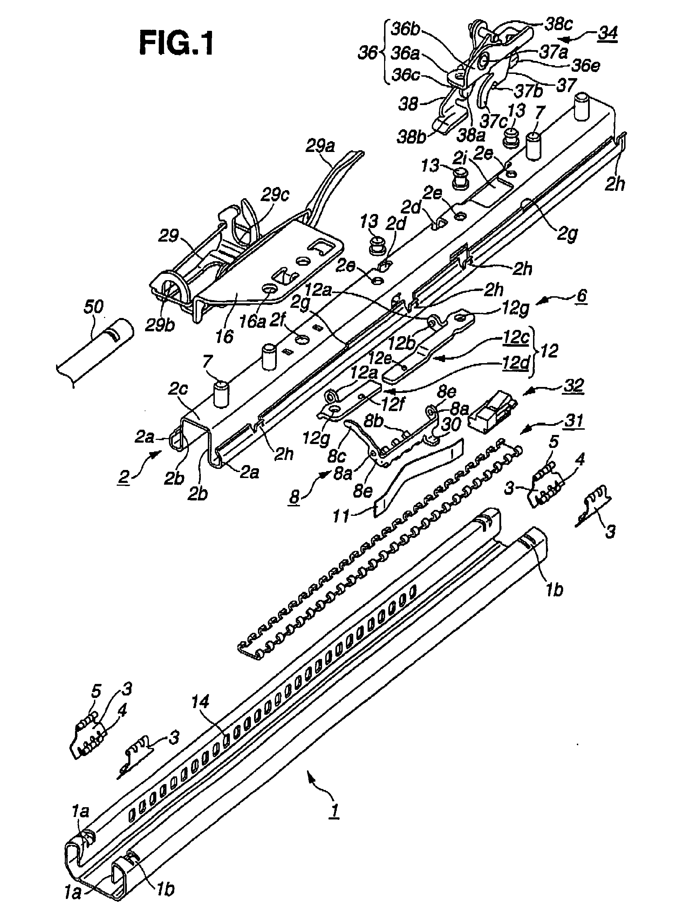

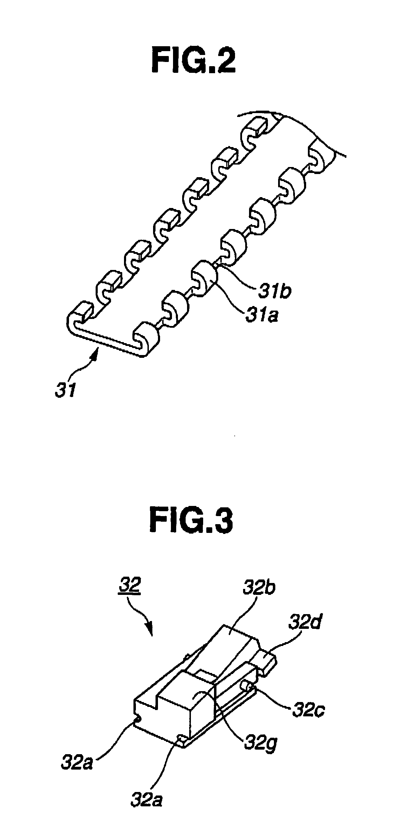

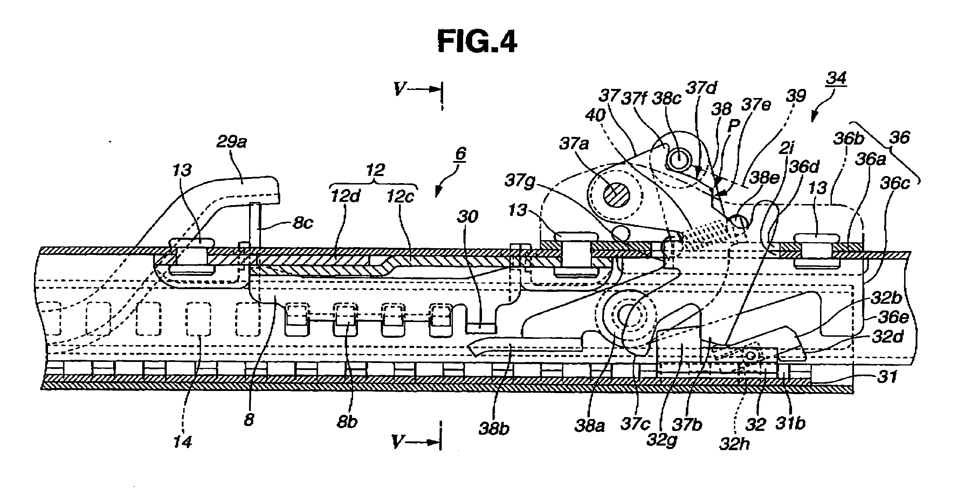

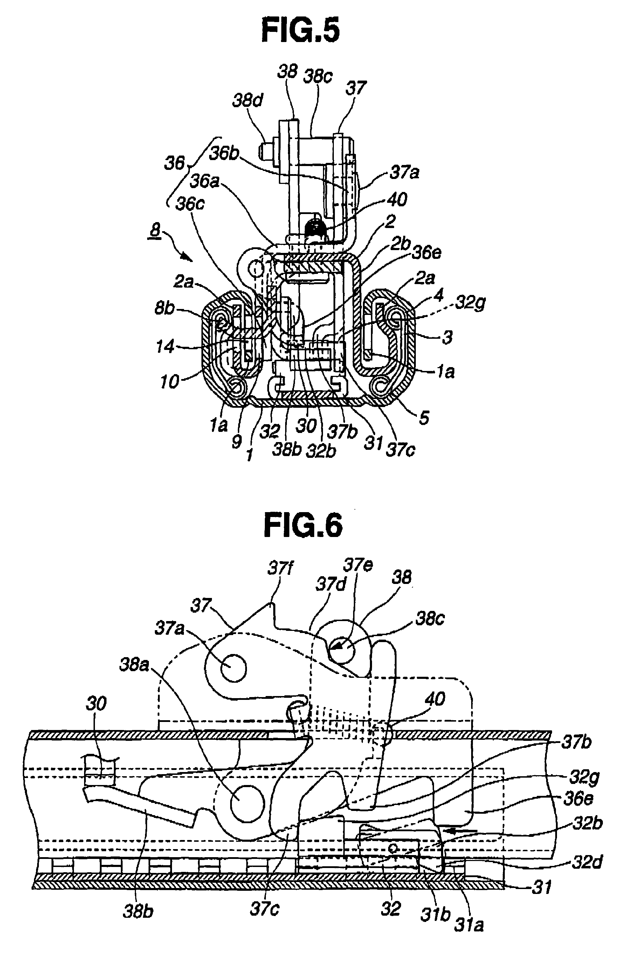

FIG. 1 is an exploded perspective view showing a seat slide apparatus for a vehicle according to one embodiment of the present invention. FIG. 2 is a perspective view showing a memory rail of the seat slide apparatus of FIG. 1. FIG. 3 is a perspective view showing a memory base of the seat slide apparatus of FIG. 1. FIG. 4 is a front sectional view showing a part of the seat slide apparatus of FIG. 1. FIG. 5 is a view as viewed from a direction shown by an arrow V-V in FIG. 4. FIG. 6 is an illustrative view showing a state in which a pushing portion pushes an engagement member in a forward direction of a vehicle. The seat slide apparatus of FIG. 1 includes a lower rail 1 fixed on a floor of the vehicle; and an upper rail 2 for mounting a seat. The lower rail 1 is formed with mounting holes (not shown) located on both end portions of the lower rail 1. The lower rail 1 is fixed on the floor of the vehicle by bolts and so on inserted into the mounting holes. On the other hand, the seat is mounted through bolts 7 to the upper rail 2. The upper rail 2 is mounted to the lower rail 1. The upper rail 2 is arranged to be slid in a longitudinal direction of the lower rail 1 through guide balls 4 and 5 held by a retainer 3.

As shown in FIG. 5, the lower rail 1 has a substantially U-shaped section opened in an upward direction. The lower rail 1 includes two downward bend portions 1a which are bent inwardly, and which extend in the downward direction. On the other hand, the upper rail 2 has a substantially U-shaped section opened in a downward direction. The upper rail 2 includes two upward bend portions 2a which are bent outwardly, and which extend in the upward direction; two upper side wall portions 2b each extending from a lower end portion of one of the upward bend portions 2a in the upward direction to confront the one of the downward bend portions 1a; and an upper wall portion 2c connecting upper end portions of the two upper side wall portions 2b.

The upper rail 2 is mounted to the lower rail 1 to sandwich each of the downward bend portions 1a of the lower rail 1 between one of upper bend portions 2a of the upper rail 2 and one of the upper side wall portions 2b confronting the one of the upward bend portions 2a, as shown in FIG. 5. As shown in FIG. 1, the lower rail 1 includes stopper portions 1b provided in upper surfaces of forward and rearward ends of the lower rail 1, formed by bending part of the lower rail 1 in the downward direction, and arranged to restrict movement range of the upper rail 2. The upper rail 2 includes two stepped portion 2g each formed by raising a middle portion of the upward bend portion 2a, and arranged to abut on the stopper portion 1b. The upper rail 2 includes stopper portions 2h provided on four corner portions of the upward bend portion 2a of the upper rail 2 in the longitudinal direction, and arranged to prevent disengagement of the retainer 3 from the upper rail 2.

Between the lower rail 1 and the upper rail 2, there is provided a rail lock mechanism 6 arranged to lock the upper rail 2 to the lower rail 1. The rail lock mechanism 6 includes a bearing bracket 12 provided on an inner upper surface (ceiling surface) of the upper rail 2; a lock arm 8 pivotally supported by the bearing bracket 12; four lock holes 9 and four lock holes 10 formed in the upper rail 2 as shown in FIG. 5, and arranged in the longitudinal direction; a plurality of lock holes 14 formed in the lower rail 1 as shown in FIGS. 1 and 5, and arranged in the longitudinal direction; and a plate spring 11 arranged to urge the lock arm 8 so that lock claws 8b are inserted into the lock holes 9, 10 and 14.

Hereinafter, the bearing bracket 12 and the lock arm 8 will be illustrated. As shown in FIG. 1, the upper rail 2 includes a pair of front and rear slits 2d each extending from the upper side wall portion 2b to the upper wall portion 2c. Within the upper rail 2, there are provided the lock arm 8, and the bearing bracket 12 arranged to support the lock arm 8.

The bearing bracket 12 includes a pair of bearing bracket members 12c and 12d each having a substantially L-shape. The bearing bracket member 12c includes a raised portion 12e formed on a connection portion formed by offset of thickness of the bearing bracket member 12c in a thickness direction. The bearing bracket member 12d includes a recessed portion 12f. The raised portion 12e of the bearing bracket member 12c is mounted in the recessed portion 12f of the bearing bracket member 12d, and the bearing bracket members 12c and 12d are integrated by the spot welding and so on. Each of the bearing bracket members 12c and 12d includes a mounting hole 12g. A pair of rivets 13 are inserted, respectively, through mounting holes 2e formed in the upper wall portion 2c of the upper rail 2 into the mounting holes 12g of the bearing bracket members 12c and 12d, so that the bearing bracket 12 is connected on the inner upper surface of the upper rail 2.

The lock arm 8 is formed into a substantially U-shape. The lock arm 8 includes a pair of arm portions 8e extending substantially parallel with each other. The lock arm 8 is pivotally supported about end portions of the arm portions 8e. That is, the arm portions 8e include, respectively, bearing holes 8a located in the same straight line at the end portions of the arm portions 8e. The bearing bracket 12 is formed into a substantially U-shape by connecting the bearing bracket members 12c and 12d. The bearing bracket 12 includes a pair of bearing portions 12a located on the both end portions of the bearing bracket 12; and a pair of pivot shafts 12b each integrally formed on one of the bearing portions 12a, and protruding from the one of the bearing portions 12a in the inside direction toward the other of the pivot shafts 12b. The pivot shafts 12b of the bearing bracket 12 are inserted, respectively, into the bearing holes 8a of the lock arm 8. In the state in which the pivot shafts 12b of the bearing bracket 12 are inserted, respectively, into the bearing holes 8a of the lock arm 8, the end portions of the arm portions 8e of the lock arm 8 and the bearing portions 12a of the bearing bracket 12 are inserted into the slits 2d from the inside of the upper rail 2 to the outside of the upper rail 2.

As shown in FIG. 1, the lock arm 8 includes a connection portion connecting between the pair of the arm portions 8e; and the four lock claws 8b and a lock release pushed portion 30 provided to the connection portion on a circumference of a circle of a predetermined radius with a center of the bearing holes 8a, and arranged in the longitudinal direction of the arm portion 8a. This lock release pushed portion 30 is provided so as to pivot the lock arm 8 against the urging force of the plate spring 11 in a lock release direction in which the lock arm 8 is released from the lock state. The lock release pushed portion 30 is bent in a rightward direction of FIG. 5 which is opposite to the lock claws 8b. The lock release pushed portion 30 is formed into an arc with a substantially one-fourth length of the circle. The lock arm 8 includes an input arm portion 8c formed by elongating one of the arm portions 8e in the longitudinal direction so as to perform the lock release operation by pivoting the lock arm 8 when an operation lever 50 described later is pulled up. As shown in FIG. 4, the input arm portion 8c protrudes upwardly from the one of the slits 2d of the upper rail 2.

Hereinafter, the plate spring 11 will be illustrated. The plate spring 11 serves as an arm urging member. The plate spring 11 constantly urges ends of the lock claws 8b of the lock arm 8 toward one of the upper side wall portions 2b of the upper rail 2. The plate spring 11 is received between the lock arm 8 and the other of the upper side wall portions 2b of the upper rail 2.

The four lock holes 9 and the four lock holes 10 are formed, respectively, in one of the upper side wall portions 2b and one of the upward bend portions 2a of the upper rail 2 provided with the lock arm 8, and arranged in the longitudinal direction at positions corresponding to the positions of the four lock claws 8b. The plurality of the lock holes 14 are arranged in the longitudinal direction in one of the downward bend portions 1a of the lower rail 1. At the lock, the lock claws 8b are inserted into and engaged with these lock holes 9, lock holes 14, and lock holes 10. Therefore, the lock holes 9, the lock holes 14, and the lock holes 10 have a height substantially identical to the height of the lock claws 8b, and a pitch identical to the pitch of the lock claws 8b.

There is provided a mechanism arranged to release the lock of the rail lock mechanism 6 by pushing the input arm portion 8c when the operation lever 50 is pulled up. A bracket 16 has an L-shaped section, and includes a horizontal portion mounted on the upper surface of the upper wall portion 2c of the upper rail 2; and a vertical portion, as shown in FIG. 1. A handle holder 29 is supported on the vertical portion of the bracket 16 through a horizontal shaft (not shown) extending in the left and right directions of the vehicle, so as to be swung in the upward and downward directions. The horizontal portion of the bracket 16 is mounted by inserting one of the bolts 7 and a rivet (not shown) inserted into mounting hole 2f of the upper rail 2, respectively, into two holes 16a. The two handle holders 29 are supported, respectively, on the sides of the upper rails 2 of the left and right seat slide apparatuses. Left and right ends of an operation lever 50 having a U-shape are inserted, respectively, into holes 29b and cutaway portions 29c of the handle holder 29. Accordingly, when a front portion of the operation lever 50 having U-shape is pulled up, pushing portions 29a positioned at rear end portions of the left and right handle holders 29 are lowered, and the left and right input arm portions 8c are simultaneously pushed in the downward direction. Therefore, the plate spring 11 is pivoted In the counterclockwise direction in FIG. 5 against the urging force of the plate spring 11, and the lock claws 8b are released and detached from the lock holes 9, 14 and 10 to be in the lock release state.

The seat slide apparatus includes a memory mechanism 34 arranged to memorize a position of the seat, that is, a position of the upper rail 2, at the walk-in at which the seat is slid in the forward direction of the vehicle, and to memorize to lock the seat at the same position when the seat is returned in the rearward direction of the vehicle. The memory mechanism 34 includes a memory rail 31 which is disposed within the lower rail 1, which extends in the longitudinal direction, and which is connected on an inner bottom surface of the lower rail 1. As shown in FIG. 2, the memory rail 31 includes claw portions 31a continuously located on both sides of the memory rail 31. Between adjacent two of the claw portions 31a of the memory rail 31, there is provided an engagement groove 31b. A pitch between the adjacent two of the engagement grooves 31b is set to the same pitch as the lock hole 9, 10 and 14. The claw portions 31a on the both sides are located, respectively, at positions to confront each other. Each of the claw portions 31a has a substantially U-shaped section. A memory base 32 is provided to the memory rail 31. The memory base 32 is arranged to be slid along the memory rail 31. The memory base 32 is formed into a block shape, as shown in FIG. 3. The memory base 32 includes a pair of grooves 32a which are formed on side surfaces of the memory base 32, and which receive end portions of the claw portions 31a of the memory rail 31 to be introduced by the claw portions 31a. The memory base 32 includes an engagement member 32b provided to pivot about a horizontal shaft 32c. On the both sides of an end portion of the engagement member 32b, there are provided engagement portions 32d protruding outwardly. Moreover, there is provided an engagement member spring 32h serving as an engagement member urging member arranged to urge the engagement member 32b to pivot the engagement member 32b to move the engagement portions 32d in the downward direction, and thereby to engage the engagement portions 32d with the engagement grooves 31b of the memory rail 31. The memory base 32 includes a stopper portion 32g which is formed on one side of a front end portion of the memory base 32, and which protrudes in the upward direction.

On a rearward portion of the vehicle of the rail lock mechanism 6, there is provided an operation mechanism arranged to operate the memory mechanism 34, as shown in FIG. 4. A memory bracket 36 includes a horizontal portion 36a connected on the upper surface of the upper rail 2 through the two rivets 13 inserted into mounting holes 2e. One of the two rivets 13 is also inserted into the bearing bracket member 12c. As shown in FIGS. 1 and 5, the memory bracket 36 includes an upper vertical portion 36b which is located on one side of the horizontal portion 36a, and which extends in the upward direction; and a lower vertical portion 36c which is located on the other side of the horizontal portion 36a, and which extends in the downward direction through an opening portion 2i of the upper surface of the upper rail 2 into the inside of the upper rail 2. As shown in FIG. 4, the horizontal portion 36a includes an opening portion 36d. A substantially C-shaped connection separation lever or connection release lever 37 includes an upper portion pivotally supported through a support shaft 37a on the upper vertical portion 36b.

The connection separation lever 37 includes a downward push portion 37b formed by bifurcating a lower portion of the connection separation lever 37, and located on the rearward side of the vehicle; and a base abutment portion 37c formed by bifurcating the lower portion of the connection separation lever 37, and located on the forward side of the vehicle. As shown in FIG. 5, the downward push portion 37b is offset from the connection separation lever 37 toward the side portion of the rail in the leftward direction. The connection separation lever 37 is arranged to be pivoted to a connection position and a separation position.

When the connection separation lever 37 is pivoted to the separation position and the downward push portion 37b is moved in the upward direction, the connection separation lever 37 is separated or released from the memory base 32. That is, the downward push portion 37b releases pushing a base end portion of the engagement member 32b of the memory base 32 to release the engagement member 32b. The released engagement member 32b is pivoted by the urging force of the engagement member spring 32h, and the engagement portion 32d is engaged with the engagement grooves 31b of the memory rail 31. The position of the memory base 32 is memorized or brought to a memory-on state.

On the other hand, when the connection separation lever 37 is pivoted to the connection position and the downward push portion 37b is pushed in the downward direction, the lower end of the downward push portion 37b is lowered beyond an upper surface of the stopper portion 32g of the memory base 32. The stopper portion 32g is sandwiched between the downward push portion 37b and the base abutment portion 37c, and accordingly the memory base 32 is moved as a unit with the connection separation lever 37. In this case, the engagement member 32b of the memory base 32 is pivoted by the depression of the downward push portion 37b against the urging force of the engagement member spring 32h so that the engagement portion 32d is disengaged or released from the engagement grooves 31b of memory rail 31. The position of the memory base 32 is brought to a memory-off state.

The connection separation lever 37 includes the base abutment portion 37c formed by bifurcating the lower portion of the connection separation lever 37, and located on the forward side of the vehicle, as mentioned above. When the upper rail 2 is moved in the rearward direction of the vehicle, the base abutment portion 37c is abutted on the stopper portion 32g of the memory base 32 to pivot the connection separation lever 37 from the separation position to the connection position. The downward push portion 37b is pushed and lowered by the pivot movement of the connection separation lever 37 to the connection position, and the memory base 32 is connected with the connection separation lever 37 so as to move as a unit with the connection separation lever 37.

The seat slide apparatus includes a lock release lever 38 pivoted to a lock position and a lock release position. The lock release lever 38 includes a middle portion pivotally supported by the lower vertical portion 36c of the memory bracket 36 through a supporting shaft 38a positioned just below the support shaft 37a; an upper end portion connected through a walk-in cable 39 to the seat back as shown in FIG. 4; and a low end portion formed with a pushing portion 38b arranged to upwardly push the lock release pushed portion 30 of the lock arm 8 of the rail lock mechanism 6 when the lock release lever 38 is pivoted from the lock position to the lock release position by being pulled by the walk-in cable 39. The pushing portion 38b includes a horizontal portion formed by bending the end portion of the pushing portion 38b into L-shape, as shown in FIG. 1.

The lock release lever 38 includes a stopper pin 38c provided at an upper portion of the lock release lever 38. The stopper pin 38c protrudes in the horizontal direction toward the connection separation lever 37, as shown in FIG. 5. The lock release lever 38 includes a connection portion 38d provided in a direction opposite to the protrusion direction of the stopper pin 38c. The connection portion 38d is connected with the walk-in cable 39. On the other hand, the connection separation lever 37 includes a pin abutment portion 37d which is located on an upper portion of the connection separation lever 37 as shown in FIG. 4, and which has an arc-shaped outer circumference on which the stopper pin 38c is abutted. That is, the outer circumference surface of the pin abutment portion 37d has the arc shape with a center of (on) the supporting shaft 38a when the downward push portion 37b of the connection separation lever 37 is lowered and positioned at the connection position. The connection separation lever 37 includes an end surface 37e of the pin abutment portion 37d having an arc-shape with a center of (on) the support shaft 37a. A reference position P represents a position at which the pin abutment portion 37d crosses the end surface 37e. The reference position P is for representing a position on the right side portion of FIG. 4 when the connection separation lever 37 is pivoted in the upward and downward directions. The connection separation lever 37 includes a stopper portion 37f located on the upper portion of the connection separation lever 37, and arranged to restrict the movement of the stopper pin 38c when the lock release lever 38 is pivoted to the lock position.

A lower half portion of the connection separation lever 37 and a lower half portion of the lock release lever 38 are inserted into the upper rail 2 through the opening portion 36d of the memory bracket 36 and the opening portion 2i of the upper rail 2. There is provided a lever spring 40 serving as a lever urging member. The single lever spring 40 of the lever urging section serves as a first lever urging member arranged to urge the reference position P of the connection separation lever 37 to an upper separation position K so as to separate the memory base 32 from the downward push portion 37b, and also as a second lever urging member arranged to urge the lock release lever 38 so that the stopper pin 38c is moved from the lock release position B to the lock position A. The lever spring 40 is disposed between the connection separation lever 37 and the lock release lever 38 as shown in FIG. 5. The lever spring 40 is provided to connect a spring hanging portion 37g formed on the left side of the middle portion of the connection separation lever 37 in FIG. 4, and a spring hanging portion 38e formed on the right side of the middle portion of the lock release lever 38 in FIG. 4.

The arc-shaped pin abutment portion 37d is formed on the upper portion of the connection separation lever 37 as mentioned above. The stopper pin 38c is provided to the lock release lever 38 so that the pin abutment portion 37d is not moved in the upward direction. When the connection separation lever 37 is pivoted to the connection position and the downward push portion 37b is lowered, the memory base 32 is connected with the connection release lever 37, and the reference position P is positioned at a lower connection position R. In this state, when the stopper pin 38c is moved to the upper left lock position A by the urging force of the lever spring 40, the connection separation lever 37 is restricted. Consequently, the reference position P can not be moved in the upward direction to the upper separation position K. On the other hand, when the stopper pin 38c is moved to the lower right lock release position B by being pulled by the walk-in cable 39 by a forward tilting or inclining motion of the seat back, the reference position P of the connection separation lever 37 can be moved from the lower connection position R to the upper separation position K. The downward push portion 37b is moved in the upward direction by the urging force of the lever spring 40 so that the memory base 32 is separated from the connection separation lever 37.

In the example, a structure described below is employed so that the seat is surely fixed at the position memorized by the memory mechanism 34 when the seat is moved in the rearward direction of the vehicle . That is, the position at which the lock claws 8b are engaged and disengaged with the lock holes 14 does not correspond to the positions at which the engagement portion 32d is engaged and disengaged with the engagement grooves 31b. That is, when the lock claws 8b of the rail lock mechanism 6 are inserted into the lock holes 14 as shown in FIG. 4, the engagement portion 32d of the memory mechanism 34 is positioned between adjacent two of the engagement grooves 31b so that the engagement portion 32d is not engaged with the engagement grooves 31b. Therefore, when the lock claws 8b are disengaged from the lock holes 14, the engagement portion 32d is positioned between the adjacent two of the engagement grooves 31b, and not engaged with the engagement grooves 31b. The memory bracket 36 on the upper rail 2's side includes a portion which pushes the engagement member 32b in the forward direction to engage the engagement portion 32d with the engagement grooves 31b when the connection separation lever 37 is moved in the forward direction of the vehicle with the upper rail 2 without the memory base 32 (with the memory base 32 left) from the above state. That is, the memory bracket 36 includes a pushing portion 36e which is located on a rearward side of downward vertical portion 36c of the memory bracket 36, and which protrudes in the downward direction, as shown in FIG. 4. The pushing portion 36e is not abutted on the engagement member 32b when the engagement portion 32d of the engagement member 32b is engaged with the engagement grooves 31b of the memory rail 31. The pushing portion 36e is abutted on the engagement member 32b to push the memory bracket 36 in the forward direction only when the engagement portion 32d is mounted on the claw portions 31a. The pushing portion 36e is not positioned at the position of the stopper portion 32g in the left and right directions, so that the pushing portion 36e is not abutted on the stopper portion 32g.

Next, the operation of the seat slide apparatus will be illustrated. The operation of the rail lock mechanism 6 and the operation of the memory mechanism 34 will be illustrated respectively.

Hereinafter, the operation of the rail lock mechanism 6 will be illustrated. When the seat is locked at an arbitrary slide position, the lock arm 8 is pivoted in the clockwise direction by the urging force of the plate spring 11 as shown in FIG. 5. In this case, the lock claws 8b of the lock arm 8 are inserted into the lock holes 9 of the upper rail 2, the lock holes 14 of the lower rail 1, and the lock holes 10 of the upper rail 2.

In a case in which the seat position is varied in the forward and rearward directions from the above described state, the forward portion of the operation lever 50 is pulled upwardly pivotally. Then, the pushing portion 29a positioned at the rear end portion of the handle holder 29 pushes the input arm portion 8c in the downward direction, and the lock arm 8 is pivoted in the counterclockwise direction of FIG. 5 against the urging force of the plate spring 11. Consequently, the lock claws 8b of the lock arm 8 are pulled out from the lock holes 10, 14 and 9, and brought to the lock release state, so that the upper rail 2 and the seat can be freely slid.

In this state, the seat is varied to an arbitrary position, and the operation lever 50 is released. Subsequently, the lock arm 8 is returned to the original state by the urging force of the plate spring 11, the lock claws 8b are inserted to the lock holes 10, 14 and 9 again as shown in FIG. 5, so that the upper rail 2 is fixed to the lower rail 1. The seat is brought to the lock state again. Irrespective of the lock state and the unlock state of the seat, the downward push portion 37b of the connection separation lever 37 pushes the base end portion of the engagement member 32b downwards, and is lowered beyond the upper surface of the memory base 32. The memory base 32 is moved integrally (as a unit) with the connection separation lever 37 and the upper rail 2. Accordingly, the memory base 32 is moved integrally with the upper rail 2 in the longitudinal direction of the memory rail 31, and it is possible to set a new position even when the seat is moved to any positions. Only when the seat back tilts in the forward direction and the walk-in cable is pulled, the memory base 32 is separated from the connection separation lever 37 to be in the memory-on state.

Next, the relationship between the downward push portion 37b of the connection separation lever 37, the memory base 32 and the memory rail 31 will be illustrated. When the apparatus is in the arbitrary slide position, the downward push portion 37b is pushed in the downward direction, and the downward push portion 37b pushes the base end portion of the engagement member 32b in the downward direction, so that the engagement member 32b is pivoted against the urging force of the engagement member spring 32h. Consequently, the engagement portion 32d at the end portion is moved in the upward direction, and separated from the engagement grooves 31b of the memory rail 31, so that the memory base 32 is separated from the memory rail 31. The lower end of the downward push portion 37b is lowered beyond the upper surface of the memory base 32, and accordingly the memory base 32 is integrated with the downward push portion 37b, and moved on the memory rail 31 with the upper rail 2.

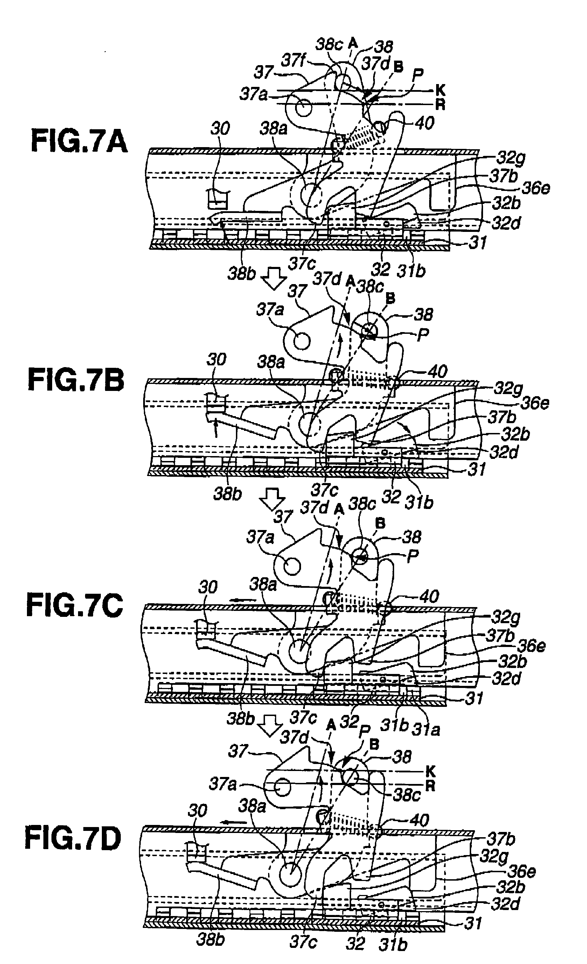

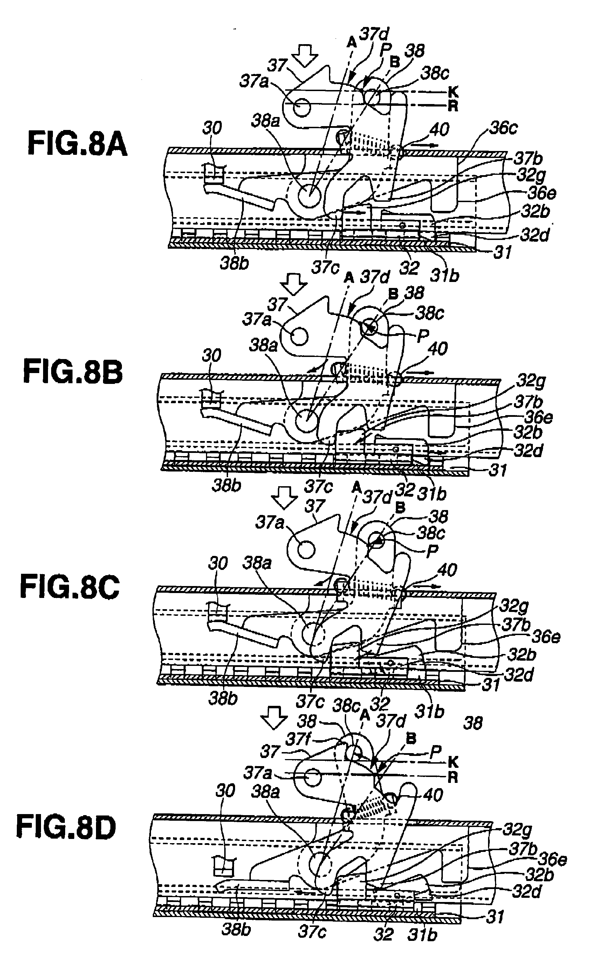

FIGS. 7A∼7D are operation illustrative views showing a case in which a seat back tilts in a forward direction and a seat is moved in the forward direction. FIGS. 8A∼8D are operation illustrative views showing a case in which the seat is raised and returned in the rearward direction. Next, the operation of the memory mechanism 34 will be illustrated. In a state in which the seat is fixed, the upper rail 2 is locked to the lower rail 1 by the seat lock mechanism 6, and the memory base 32 is connected with the connection separation lever 37. The lock claws 8b are inserted into ones of the lock holes 14 of the lower rail 1 at original or initial positions, and the memory base 32 is separated from the memory rail 31. When the seat back inclines in the forward direction from the above described state so that the occupant gets on the rear seat in the two-door vehicle, the walk-in cable 39 is pulled and the lock release lever 38 is pivoted about the support shaft 38a shown in FIG. 7A in the clockwise direction. Consequently, the upper stopper pin 38c is pivoted from the lock position A of FIG. 7A to the lock release position B of FIG. 7B, so that the restriction of the connection separation lever 37 is released. The released connection separation lever 37 is pivoted about the support shaft 37a in the counterclockwise direction by the urging force of the lever spring 40. Therefore, the reference position P of the connection separation lever 37 is moved from the lower connection position R of FIG. 7B to the upper release position K of FIG. 7D.

When the reference position P of the connection separation lever 37 is moved to the separation position K as shown in FIG. 7D, the downward push portion 37b of the connection separation lever 37 releases the depression of the base end portion of the engagement member 32b of the memory base 32. Consequently, the engagement member 32b is pivoted in the clockwise direction by the urging force of the engagement member spring 32h, and the engagement portion 32d at the end of the engagement member 32b is pivoted to the memory rail 31. The position at which the lock claws 8b are engaged and disengaged with the lock holes 14 does not correspond to the position at which the engagement portion 32d is engaged and disengaged with the engagement grooves 31b. Accordingly, at the position at which the lock claws 8b of the seat lock mechanism 6 are pulled out from the ones of the lock holes 14 at the original position as shown in FIG. 4, the engagement portion 32d of the memory mechanism 34 is positioned between the adjacent two of the engagement grooves 31b. At this position, the engagement member 32b is urged by the engagement member spring 32h. As shown in FIG. 7D, the engagement portion 32d of the memory base 32 is not engaged with the engagement grooves 31b, and is merely mounted on the claw portions 31a.

When the lock release lever 38 is pivoted to the lock release position B as shown in FIG. 7B, the pushing portion 38b at the lower end of the lock release lever 38 pushes the lock release pushed portion 30 of the lock arm 8 in the upward direction so as to release the lock of the upper rail 2. Therefore, the upper rail 2 is moved with the seat in the forward direction by the spring for the walk-in and so on. In this case, the reference position P of the connection separation lever 37 is positioned at the separation position K, and the seat is moved with the upper rail 2 in the forward direction of the vehicle to leave the memory base 32 on the memory rail 31. As shown in FIG. 6, the pushing portion 36e pushes the engagement member 32b protruding in the upward direction of the memory base 32 on the memory rail 31 in the forward direction. Therefore, the engagement portion 32d is engaged with the engagement grooves 31b located at a position which is forward of the original lock position, and which is nearest to the original lock position. The memory base 32 is brought to the memory-on state at the position of the engagement groove 31b which is forward from the original lock position by a substantially half pitch.

When the upper rail 2 is moved with the seat in the forward direction of the vehicle, the occupant gets on or off the rear seat. Then, even when the seat back tilted in the forward direction is raised (returned) so as not to pull the walk-in cable, the stopper pin 38c of the lock release lever 38 is caught by the end surface 37e of the connection separation lever 37, and accordingly the stopper pin 38c can not be pivoted to the lock position A. Moreover, the connection separation lever 37 is pivoted in the release direction by the urging force of the lever spring 40, the connection separation lever 37 separated from the memory base 32 is not connected with the memory base 32 by being pivoted in the connection direction.

In this state, when the seat and the upper rail 2 are moved in the rearward direction of the vehicle, the base abutment portion 37c of the connection separation lever 37 is moved in the rearward direction as shown in FIG. 8A, and abutted on the stopper portion 32g of the memory base 32 which is in the memory-on state, and the connection separation lever 37 is pivoted in the clockwise direction, as shown in FIGS. 8B, 8C and 8D. Consequently, as shown in FIG. 8A, the reference position P of the connection separation lever 37 is moved from the upper separation position K to the lower connection position R shown in FIG. 8C. Accordingly, the downward push portion 37b of the lower end of the connection separation lever 37 pushes the base end portion of the engagement member 32b of the memory base 32 in the downward direction against the urging force of the engagement member spring 32h, and the engagement portion 32d of the end portion of the engagement member 32b is separated from the engagement grooves 31b of the memory rail 31 to separate the memory base 32 from the memory rail 31. The memory base 32 is brought to the memory-off state, and the lower surface of the downward push portion 37b is lowered below the upper surface of the memory base 32, and the memory base 32 is connected with the connection separation lever 37 again.

In this way, when the connection separation lever 37 is pivoted to the connection position, the pin abutment portion 37d is lowered to separate the stopper pin 38c from the end surface 37e of the pin abutment portion 37d. As shown in FIGS. 8C and 8D, the lock release lever 38 is pivoted in the counterclockwise direction by the urging force of the lever spring 40, and the stopper pin 38c is returned from the lock release position B to the lock position A, and abutted on the stopper portion 37f, so that the stopper pin 38c is stopped. The connection separation lever 37 is restricted by the stopper pin 38c, and the connection separation lever 37 can not be pivoted in the counterclockwise direction which is the release direction.

When the lock release lever 38 shown in FIGS. 8C and 8D is pivoted to the lock position A, the pushing portion 38b of the lower end of the lock release lever 38 is pivoted to release the pushing of the lock release pushed portion 30 of the lock arm 8. The lock arm 8 is urged in the lock direction by the urging force of the plate spring 11, and however the lock claws 8b are not inserted directly into the ones of the lock holes 14 of the lower rail 1 at the original position. In this example, the position at which the lock claws 8b are engaged with the lock holes 14 does not correspond to the position at which the engagement portion 32d is engaged with the engagement grooves 31b. In this case, the memory base 32 is moved in the forward direction of the vehicle, and the engagement portion 32d was engaged with the engagement grooves 32d. Accordingly, the lock claws 8b are located at positions at which are forward of the ones of the lock holes 14 at the original position, by a substantially half pitch, and the lock claws 8b are abutted on a portion between the adjacent two of the lock holes 14. From this state, the upper rail 2 is further returned in the rearward direction of the vehicle, and the lock claws 8b is moved with the upper rail 2 in the rearward direction. The lock claws 8b are surely inserted into the ones of the lock holes 14 at the original position. Accordingly, it is possible to surely engage the lock claws 8b with the original lock holes 14 even when the timing of the pivot movement of the connection separation lever 37 is deviated. The seat is not locked at the position different from the memorized position, like the earlier technology.

In this embodiment, the pivot shaft of the lock arm is located within the slit of the upper rail. However, it is optional that the pivot shaft is located within the upper rail. Because the lock release pushed portion formed in the lock arm can be pushed by the pushing portion of the lock release lever located within the upper rail. In this example, the single lever spring serves as the first lever urging section arranged to urge the connection separation lever to the separation position, and also the second lever urging section arranged to urge the lock release lever to the lock position. However, it is optional to provide the first lever urging section and the second lever urging section formed of different members.

A seat slide apparatus according to the embodiment of the present invention includes: a lower rail fixed on a lower surface of a vehicle body, the lower rail including lock holes formed at a predetermined pitch; an upper rail slidably mounted to the lower rail, and connected with a seat; a lock arm pivotally provided to the upper rail; a plurality of lock claws formed in the lock arm, and arranged to be engaged with the lock holes of the lower rail; an arm urging member arranged to urge the lock arm in a lock direction in which the lock claws are engaged with the lock holes; a lock release pushed portion formed in the lock arm, and arranged to pivot the lock arm against the urging force of the arm urging member in a lock release direction in which the lock claws are disengaged with the lock holes; a memory rail connected with an upper surface within the lower rail, the memory rail including engagement grooves formed at a pitch identical to the pitch of the lock holes; a memory base arranged to move along the memory rail, the memory base including: an engagement member pivotally provided to the memory base, the engagement member including an engagement portion arranged to be engaged and disengaged with one of the engagement grooves, and an engagement member urging member arranged to urge the engagement member in a direction in which the engagement portion is engaged with one of engagement grooves; a lock release lever connected with a walk-in cable arranged to be pulled in synchronism with a forward tilting motion of a seat back, and arranged to push the lock release pushed member when the walk-in cable is pulled, and to pivot the lock arm in the lock release direction; and a connection separation lever arranged to connect the memory base to the upper rail to integrally move the memory base and the upper rail in the forward and rearward directions of the vehicle, to release the connection between the upper rail and the memory base and to release a pushing to the engagement member so that the engagement portion is engaged with one of the engagement grooves when the lock release lever pivots the lock arm in the lock release direction; the lock claws being arranged to be engaged or disengaged with the lock holes at a position other than a position at which the engagement portion is engaged or disengaged with one of the engagement grooves, the upper rail including a pushing portion arranged to push the engagement member in the forward direction of the vehicle when the upper rail is moved in the forward direction of the vehicle at the release state between the upper rail and the memory base, and to move the memory base to a position at which the engagement portion is engaged with one of the engagement grooves.

In this seat slide apparatus, when the seat back is tilted in the forward direction in the state in which the lock claws are inserted into the ones of the lock holes of the lower rail at the original position, the walk-in cable is pulled, and the lock release lever is pivoted. Consequently, the released connection separation lever is pivoted to release the connection between the upper rail and the memory base. The engagement member provided to the memory base is pivoted by the urging force of the engagement member urging member, and the engagement portion of the engagement member is pivoted in the direction in which the engagement portion is engaged with the engagement grooves. The position at which the lock claws can be engaged and disengaged with the lock holes does not correspond to the position at which the engagement portion can be engaged and disengaged with the engagement grooves. The engagement portion is abutted on the memory rail between the adjacent two of the engagement grooves. The engagement portion of the memory base is not engaged with the engagement grooves, and the memory base can be moved. On the other hand, when the walk-in cable is pulled and the lock release lever is pivoted, the lock release lever pushes the lock release pushed portion of the lock arm, and the lock of the upper rail is released. When the upper rail is moved with the seat in the forward direction by the spring for the walk-in and so on, the pushing portion on the upper rail's side pushes the engagement member of the memory base in the forward direction of the vehicle. Therefore, the engagement portion is engaged with the engagement grooves which is forward of the original lock position before the lock release, and which is nearest to the original lock position. The memory base is brought to the memory-on state at the position of the engagement grooves which is forward by a substantially half pitch from the original lock position.

Then, when the tilted seat back is raised and the upper rail is moved in the rearward direction, the connection separation lever moved in the rearward direction is abutted on the memory base which is in the memory-on state, and the connection separation lever is pivoted. Accordingly, the connection separation lever depresses the engagement member of the base member against the urging force of the engagement member urging member. The engagement portion of the engagement member is separated from the engagement grooves of the memory rail, and the memory base is separated from the memory rail, so that the memory base is brought to the memory-off state. The memory base is connected with the upper rail. When the connection separation lever is pivoted, the lock release lever is pivoted to release the pushing to the lock release pushed portion of the lock arm. Consequently, the lock arm is urged by the urging force of the arm urging member in the lock direction, and however the lock claws are not inserted directly into the ones of the lock holes of the lower rail at the original position. In this example, the position at which the lock claws are engaged or disengaged with the lock holes does not correspond to the position at which the engagement portion is engaged or disengaged with the one of the engagement grooves. Accordingly, the lock claws are located at positions at which are forward of the ones of the lock holes at the original position, by a substantially half-pitch, and the lock claws are abutted on a portion between the adjacent two of the lock holes 14. In the state in which the lock claws are urged to the lower rail, the lock claws are moved with the upper rail in the rearward direction. The lock claws are surely inserted into the ones of the lock holes to be inserted originally.

In the seat slide apparatus according to the embodiment of the present invention, the connection separation lever is pivotally supported by the upper rail, the connection separation lever includes a downward push portion located at a lower end of the connection separation lever, and a base abutment portion located on a forward side of the downward push portion; the lock release lever is pivotally supported by the upper rail, and the lock release lever includes a pushing portion located at a lower end of the lock release lever, and arranged to the lock release pushed portion of the lock arm. The connection separation lever is pivotally supported by the upper rail, the connection separation lever includes a downward push portion located at a lower end of the connection separation lever, and a base abutment portion located on a forward side of the downward push portion; the lock release lever is pivotally supported by the upper rail, and the lock release lever includes a pushing portion located at a lower end of the lock release lever, and arranged to the lock release pushed portion of the lock arm. The seat slide apparatus further includes a first lever urging section arranged to urge the connection separation lever to the separation position, and a second lever urging section arranged to urge the lock release lever to the lock position. The lock release lever is arranged to be pivoted to the lock position when the connection separation lever is in the connection position; and the lock release lever is held in the lock release position when the connection separation lever is in the separation position.

In this seat slide apparatus, when the seat back is inclined in the forward direction and the walk-in cable is pulled, the lock release lever is pivoted from the lock position to the lock release position. The connection separation lever is released from the restriction by the lock release, and pivoted from the connection position to the separation position by the urging force of the first lever urging section. The downward push portion at the lower end of the connection separation lever releases the depression of the base end portion of the engagement member of the memory base. Accordingly, the engagement member is pivoted by the urging force of the engagement member urging member, and the engagement portion is engaged with the engagement grooves of the memory rail. When the lock release lever is pivoted to the lock release position, the pushing portion of the lock release lever pushes the lock release pushed portion of the lock arm to release the lock of the upper rail. When the upper rail is moved in the rearward direction of the vehicle, the base abutment portion of the connection separation lever moved in the rearward direction is abutted on the memory base which is in the memory-on state, and the connection separation lever is pivoted from the separation position to the connection position. Accordingly, the downward push portion of the connection separation lever downwardly pushes the base end portion of the engagement member of the memory base against the engagement member urging member. The engagement portion is separated from the engagement grooves of the memory rail, and the memory base is released from the memory rail. The memory base is brought to the memory-off state, and simultaneously the memory base is connected with the connection separation lever. When the connection separation lever is pivoted to the connection position, the lock release lever is pivoted from the lock release position to the lock position by the urging force of the second lever urging section. The pushing portion at the lower end of the lock release lever is pivoted to release the push to the lock release pushed portion of the lock arm. Consequently, the lock arm is pivoted in the lock direction by the urging force of the arm urging member, and inserted into the lock holes of the lower rail, so that the upper rail is locked.

In the seat slide apparatus according to the embodiment of the present invention, the seat slide apparatus further comprises a lever urging member serving as the first lever urging section and the second lever urging section. The connection separation lever includes a spring hanging portion; the lock release lever includes a spring hanging portion; and the lever urging member connects the spring hanging portion of the connection separation lever and the spring hanging portion of the lock release lever.

This application is based on a prior Japanese Patent Application No. 2007-225175. The entire contents of the Japanese Patent Application No. 2007-225175 with a filing date of August 31, 2007 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A seat slide apparatus for a vehicle comprising:
a lower rail fixed on a lower surface of a vehicle body, the lower rail including lock holes formed at a predetermined pitch;
an upper rail slidably mounted to the lower rail, and connected with a seat;
a lock arm pivotally provided to the upper rail;
a plurality of lock claws formed in the lock arm, and arranged to be engaged with the lock holes of the lower rail;
an arm urging member arranged to urge the lock arm in a lock direction in which the lock claws are engaged with the lock holes;
a lock release pushed portion formed in the lock arm, and arranged to pivot the lock arm against the urging force of the arm urging member in a lock release direction in which the lock claws are disengaged with the lock holes;
a memory rail connected with an upper surface within the lower rail, the memory rail including engagement grooves formed at a pitch identical to the pitch of the lock holes;
a memory base arranged to move along the memory rail, the memory base including:
an engagement member pivotally provided to the memory base, the engagement member including an engagement portion arranged to be engaged and disengaged with one of the engagement grooves, and an engagement member urging member arranged to urge the engagement member in a direction in which the engagement portion is engaged with one of engagement grooves;
a lock release lever connected with a walk-in cable arranged to be pulled in synchronism with a forward tilting motion of a seat back, and arranged to push the lock release pushed member when the walk-in cable is pulled, and to pivot the lock arm in the lock release direction; and
a connection separation lever arranged to connect the memory base to the upper rail to integrally move the memory base and the upper rail in the forward and rearward directions of the vehicle, to release the connection between the upper rail and the memory base and to release a pushing to the engagement member so that the engagement portion is engaged with one of the engagement grooves when the lock release lever pivots the lock arm in the lock release direction;
the lock claws being arranged to be engaged or disengaged with the lock holes at a position other than a position at which the engagement portion is engaged or disengaged with one of the engagement grooves,
the upper rail including a pushing portion arranged to push the engagement member in the forward direction of the vehicle when the upper rail is moved in the forward direction of the vehicle at the release state between the upper rail and the memory base, and to move the memory base to a position at which the engagement portion is engaged with one of the engagement grooves.

2. The seat slide apparatus as claimed in Claim 1, wherein the connection separation lever is pivotally supported by the upper rail, the connection separation lever includes a downward push portion located at a lower end of the connection separation lever, and a base abutment portion located on a forward side of the downward push portion; the lock release lever is pivotally supported by the upper rail, and the lock release lever includes a pushing portion located at a lower end of the lock release lever, and arranged to the lock release pushed portion of the lock arm.

3. The seat slide apparatus as claimed in Claim 2, wherein the connection separation lever is arranged to pivot between a connection position at which the downward push portion of the connection separation lever pushes an end portion of the engagement member in a downward direction against the pushing force of the engagement member urging member and the connection separation lever is connected with the memory base to integrally move with the memory base, and a separation position at which the downward push portion is separated from the end portion of the engagement member and the connection separation lever is separated from the memory base so that the upper rail is moved in the forward direction of the vehicle; and the lock release lever is arranged to pivot between a lock position at which the lock release pushed portion of the lock arm is not pushed, and a lock release position at which the lock release pushed portion is pushed by pulling the walk-in cable.

4. The seat slide apparatus as claimed in Claim 3, wherein the seat slide apparatus further comprises a first lever urging section arranged to urge the connection separation lever to the separation position, and a second lever urging section arranged to urge the lock release lever to the lock position.

5. The seat slide apparatus as claimed in Claim 4, wherein the lock release lever is arranged to be pivoted to the lock position when the connection separation lever is positioned in the connection position; and the lock release lever is held in the lock release position when the connection separation lever is positioned in the separation position.

6. The seat slide apparatus as claimed in Claim 5, wherein the seat slide apparatus further comprises a lever urging member serving as the first lever urging section and the second lever urging section.

7. The seat slide apparatus as claimed in Claim 6, wherein the connection separation lever includes a spring hanging portion; the lock release lever includes a spring hanging portion; and the lever urging member connects the spring hanging portion of the connection separation lever and the spring hanging portion of the lock release lever.
